# EUROPÄISCHE PATENTANMELDUNG

(11) **EP 2 998 627 A1**
(43) Veröffentlichungstag der Anmeldung: **23.03.2016**
(21) Anmeldenummer: 15175621.0
(22) Anmeldetag: 07.07.2015
(51) Int. Cl.: F16K 31/06, H01F 7/16

(54) **HYDRAULIKVENTIL**

(30) Priorität: 18.09.2014 DE 102014013602
(71) Anmelder: Hilite Germany GmbH, 97828 Marktheidenfeld (DE)
(72) Erfinder: Boban, Drazen, 72622 Nürtingen (DE); Eisenberger, Andreas, 72622 Nürtingen (DE); Hertwig, Christian, 70736 Fellbach (DE); Knecht, Andreas, 72127 Kusterdingen (DE); Jacob, Thomas, 70199 Stuttgart (DE)

(57) **Zusammenfassung**

Die Erfindung betrifft ein Hydraulikventil (10), insbesondere ein hydraulisches Getriebeventil, das ein magnetisierbares Gehäuse (12) umfasst, welches eine Magnetspule (14) an einem Außenumfang (16) und an wenigstens einer Stirnseite (18) umschließt. Weiter umfasst das Hydraulikventil (10) einen im Inneren des Gehäuses (12) angeordneten Polhut (20), welcher in Richtung Stirnseite (18) der Magnetspule (14) axial aufeinander folgend einen Polkern (22) und ein Polrohr (24) umfasst, wobei Polkern (22) und Polrohr (24) durch einen Verbindungssteg (26) einstückig verbunden sind, wobei der Polkern (22) über einen Polkernkonus (50) mit dem Verbindungssteg (26) und/oder das Polrohr (24) über einen Polrohrkonus (52) mit dem Verbindungssteg (26) verbunden sind, und wobei das Polrohr (24) an einer dem Verbindungssteg (26) abgewandten Stirnseite (27) ein mit einer Abschlussplatte (28) geschlossenes freies Ende (30) aufweist. Das Hydraulikventil (10) umfasst weiter einen im Inneren (46) des Polhuts (20) geführten Anker (40), wobei in einer Lauffläche (58) zwischen Anker (40) und einem Bereich des Polkerns (22) und/oder des Verbindungsstegs (26) eine erste Ausnehmung (56) in radialer Richtung vorgesehen ist.

## Beschreibung

### Technisches Gebiet

Die Erfindung betrifft ein Hydraulikventil, insbesondere ein hydraulisches Getriebeventil eines Kraftfahrzeugs.

### Stand der Technik

Um bei großen Getriebeölwechselintervallen, im Extremfall bei so genannten Lebensdauerfüllungen, dennoch ausfallsicher zu sein, muss das Getriebeventil eine hohe Robustheit aufweisen. Hohe Robustheit lässt sich zwar mit einem großen Spiel bei den zu bewegenden Teilen erzielen. Jedoch geht das zu Lasten der Regelgüte.

Aus der DE 10 2011 053 023 A1 ist ein Hydraulikventil bekannt, das eine hohe Robustheit neben einer hohen Regelgüte aufweist. Die hohe Robustheit wird erreicht, indem Schmutzpartikel im Betriebsmedium nicht zum Verklemmen des Getriebeventils führen können, da der Anker so große Axialkräfte aufbringen kann, dass dieser sich stets frei reißen kann. Gleichzeitig weist das Hydraulikventil eine hohe Regelgüte auf, die mittels mehrerer konstruktiver Maßnahmen erreicht wird. So werden insbesondere die Querkräfte zwischen dem Anker und einem Polrohr minimiert.

Ein solches konstruktives Merkmal zur Verringerung der Querkräfte ist dort ein sehr enges Laufspiel zwischen dem Anker und dem Polrohr, das mittels einer sehr dünnen Trennschicht anstelle beispielsweise einer nicht magnetischen Hülse oder einer nicht magnetischen Beschichtung erreicht wird. Eine solche sehr dünne Trennschicht liegt sinnvollerweise bei einer Schichtdicke kleiner 60 µm. Die dünne Trennschicht kann beispielsweise chemisch oder galvanisch aufgebracht werden. Als chemisches Verfahren kann beispielweise das chemische Vernickeln Anwendung finden.

Zur Herstellung eines proportionalen Verhaltens des Getriebeventils ist in der DE 10 2011 053 023 A1 ein Polkernkonus vorgesehen. Mit einem solchen Polkernkonus sind aber auch verschiedene andere Kraft/Weg-Verläufe realisierbar. Der linearer Kraft/Weg-Verlauf ist jedoch zur Vereinfachung der Regelung zumeist gewünscht.

### Offenbarung der Erfindung

Eine Aufgabe der Erfindung ist es, ein Hydraulikventil zu schaffen, insbesondere als hydraulisches Getriebeventil, das möglichst hohe Robustheit mit langen Getriebeölwechselintervallen und gleichzeitig kostengünstiger Bauweise vereint.

Die vorgenannte Aufgabe wird mit den Merkmalen der unabhängigen Ansprüche gelöst.

Günstige Ausgestaltungen und Vorteile der Erfindung ergeben sich aus den weiteren Ansprüchen, der Beschreibung und der Zeichnung.

Es wird ein Hydraulikventil, insbesondere ein hydraulisches Getriebeventil, vorgeschlagen, das ein magnetisierbares Gehäuse umfasst, welches eine Magnetspule an einem Außenumfang und an wenigstens einer Stirnseite umschließt. Weiter umfasst das Hydraulikventil einen im Inneren des Gehäuses angeordneten Polhut, welcher in Richtung Stirnseite der Magnetspule axial aufeinander folgend einen Polkern und ein Polrohr umfasst, wobei Polkern und Polrohr durch einen Verbindungssteg einstückig verbunden sind, wobei der Polkern über einen Polkernkonus mit dem Verbindungssteg und/oder das Polrohr über einen Polrohrkonus mit dem Verbindungssteg verbunden sind, und wobei das Polrohr an einer dem Verbindungssteg abgewandten Stirnseite ein mit einer Abschlussplatte geschlossenes Ende aufweist. Das Hydraulikventil umfasst weiter einen im Inneren des Polhuts geführten Anker, wobei in einer Lauffläche zwischen Anker und einem Bereich des Polkerns und/oder des Verbindungsstegs eine Ausnehmung in radialer Richtung vorgesehen ist.

Das erfindungsgemäße Hydraulikventil, das ein Magnetkonzept mit einteiligem Polhut aus Polkern/Polrohr umsetzt, weist einen Absatz zur mechanischen Entlastung im Bereich des Verbindungssteges am Polhut auf, um dadurch mögliche Bauteildeformationen und eine daraus resultierende negative Beeinflussung des Ankerlaufes im Polhut und eine hierdurch hervorgerufene Magnet/Ventil-Hysterese zu verhindern.

Ein einteiliger Polhut aus Polkern und Polrohr weist den Vorteil auf, dass bei der Fertigung des Polhuts die mechanische Achse des gesamten Polhuts festgelegt werden kann, und so die Lauffläche des Magnetankers günstig definiert ist, da die beiden Achsen von Polhut und Magnetanker in Übereinstimmung gebracht werden können, um so günstige Laufeigenschaften des Ankers zu gewährleisten. Dadurch, dass der Anker im Bereich des Verbindungsstegs wegen des Absatzes die innere Wandung des Polkerns nicht direkt berührt, übt der Anker auch keine Kräfte auf den Polkern aus und die bei der Fertigung definierte Längsachse des Polhuts wird nicht durch den relativ dünnen Verbindungssteg zwischen Polkern und Polrohr auf Grund von Kräften des Ankers auf den Polkern deformiert.

Der Absatz kann zwischen umlaufenden Ausnehmungen in radialer Richtung im Polhut oder dem Anker angeordnet sein. Die Ausnehmungen können in radialer Richtung unterschiedlich tiefe Ringnuten sein oder eine Ringnut und ein Ringspalt mit unterschiedlicher Tiefe. Der Absatz stellt dann den Übergang zwischen den unterschiedlich tiefen Ausnehmungen dar.

Vorteile, die sich aus dem Konzept eines Absatzes am Polhut ergeben, sind zum einen eine Erhöhung der Robustheit des Magneten/Ventils gegen eingeleitete Kräfte bei der Einzelteilfertigung. Weiter wird der Verbindungssteg am Polhut mechanisch entlastet, da der Anker nicht direkt auf dem Verbindungssteg läuft. Eine Funktionsbeeinflussung des Magneten aufgrund plastischer Deformation des empfindlichen, dünnwandigen Verbindungssteges während der Fertigung des Polhuts wird verhindert. Eine solche Deformation könnte z.B. durch Torsion oder elastisches Verdrängen der Wand während der Vor- und Finish-Bearbeitung des Polhuts, aufgrund der Wandstärkeunterschiede, verursacht werden.

Ein weiterer Vorteil stellt eine Erhöhung der Robustheit des Magneten/Ventils gegen thermische Einflüsse/Kräfte im Betrieb dar. Der Verbindungssteg wird mechanisch entlastet. So wird eine Funktionsbeeinflussung des Magneten aufgrund thermischer Deformation des empfindlichen, dünnwandigen Verbindungssteges verhindert.

Als zusätzlichen Vorteil weist das erfindungsgemäße Hydraulikventil eine Reduzierung der magnetischen Querkräfte im Bereich des Entlastungsabsatzes zur Minimierung der Magnethysterese und somit der Ventilhysterese auf.

In einer vorteilhaften Ausgestaltung kann in einer Lauffläche zwischen Polrohr und Anker eine zweite Ausnehmung in radialer Richtung vorgesehen sein. Die Lauffläche kann dem Polrohr oder dem Anker zugeordnet sein. Durch eine solche Ausnehmung, die beispielsweise radial umlaufend ausgeführt sein kann, kann ein zusätzliches Schmutz-Reservoir gebildet werden, um so eine negative Beeinflussung des Ankerlaufs im Polhut und einen hierdurch hervorgerufene Magnet/Ventil-Hysterese zu verhindern. Hierdurch wird eine Erhöhung der Robustheit des Magneten gegen Verschmutzung des Betriebsmediums mittels einer optionalen radial umlaufenden Ringnut in der Ankerlaufbohrung des Polhuts erreicht, um so ein Schmutzreservoir zwischen Anker und im Bereich der Ankermantelfläche abgesetztem Polhut zu bilden.

Die Erfindung betrifft nach einem weiteren Aspekt ein Hydraulikventil, insbesondere ein hydraulisches Getriebeventil, das ein magnetisierbares Gehäuse umfasst, welches eine Magnetspule an einem Außenumfang und an wenigstens einer Stirnseite umschließt. Weiter umfasst das Hydraulikventil einen im Inneren des Gehäuses angeordneten Polhut, welcher in Richtung Stirnseite der Magnetspule axial aufeinander folgend einen Polkern und ein Polrohr umfasst, wobei Polkern und Polrohr durch einen Verbindungssteg einstückig verbunden sind, wobei der Polkern über einen Polkernkonus mit dem Verbindungssteg und/oder das Polrohr über einen Polrohrkonus mit dem Verbindungssteg verbunden sind, und wobei das Polrohr an einer dem Verbindungssteg abgewandten Stirnseite ein mit einer Abschlussplatte geschlossenes Ende aufweist. Das Hydraulikventil umfasst weiter einen im Inneren des Polhuts geführten Anker, wobei in einer Lauffläche zwischen Polrohr und Anker eine Ausnehmung vorgesehen ist. Ein solches Hydraulikventil weist eine Ausnehmung als Bildung eines Schmutzreservoirs zwischen Anker und im Bereich der Ankermantelfläche abgesetztem Polhut mit den oben bereits beschriebenen Vorteilen auf.

In einer weiteren vorteilhaften Ausgestaltung kann bei dem Hydraulikventil zwischen Anker und einem Bereich des Polkerns und/oder des Verbindungsstegs eine erste Ausnehmung in radialer Richtung vorgesehen sein. Diese erste Ausnehmung kann als Entlastungsausnehmung zur mechanischen Entlastung des empfindlichen, weil relativ dünnwandigen Verbindungsstegs bei der Fertigung, aber auch im Betrieb des Hydraulikventils, mit den oben beschriebenen Vorteilen dienen. Weiter wird dadurch eine Reduzierung der magnetischen Querkräfte im Bereich der Entlastungsausnehmung zur Minimierung der Magnethysterese und somit der Ventilhysterese bewirkt.

Die erste Ausnehmung kann in radialer Richtung als unterschiedlich tiefe Ringnuten ausgebildet sein oder z.B. als Ringnut und Ringspalt mit unterschiedlicher Tiefe.

Vorteilhaft kann an einem Ende der ersten Ausnehmung im Bereich eines Übergangs zwischen Verbindungssteg und einem Polrohrkonus eine Abstreifkante ausgebildet ist. Die erste Ausnehmung, die an einer Seite in einer Kante endet, welche als Abstreifkante zum Abstreifen von im Betriebsmedium sich befindenden Partikeln von der Lauffläche des Magnetankers dienen kann, stellt so ein zusätzliches Schmutzreservoirs vor dem Magnetanker im Polhut im Bereich des Verbindungssteges dar. Durch das Abstreifen möglicher Partikel von der Ankerlauffläche wird eine Behinderung der freien Bewegung des Magnetankers umgangen.

Zur Sicherstellung der Funktion von hydraulischen Ventilen in einer mechatronischen Getriebesteuerung ist es grundsätzlich notwendig, die Lagerungen von Magnetankern gegen das Einwirken externer Einflüsse so robust wie möglich auszuführen. So ist neben der Erzielung einer mechanischen Robustheit die Robustheit gegen kontaminierte Betriebsmedien von entscheidender Bedeutung. Insbesondere große Partikel können aufgrund der geringen Arbeitsspalte und Laufspiele zur Beeinträchtigung der Magnet- und Ventilfunktion zur Beeinträchtigung der magnetischen und/oder hydraulischen Funktion bis zum Ausfall durch Blockieren führen.

Das erfindungsgemäße Hydraulikventil kann als Getriebeventil eingesetzt werden für komfortabel reibschlüssig zu koppelnde Getriebekupplungen - insbesondere Anfahr-/Schaltkupplungen oder Synchronisierungen -, das den Einsatz bei nur wenig bis gar keinen Getriebeölwechseln ermöglicht. Überdies kann ein solches Getriebeventil auch in Staaten mit schlechter Getriebeölqualität eingesetzt werden.

Durch die erfindungsgemäße Abstreifkante wird eine Erhöhung der Robustheit des Magneten gegen Verschmutzung des Betriebsmediums durch den Abstreifeffekt zwischen Anker und abgesetztem Polhut an der Abstreifkante des Polhuts erreicht.

In einer vorteilhaften Ausgestaltung kann die erste Ausnehmung als Ringnut ausgebildet sein. Eine radial umlaufende erste Ausnehmung in Form einer Ringnut ist sowohl von der Fertigung her günstig darstellbar als auch im Betrieb auf Grund der Rotationssymmetrie günstig, da der Anker so keine bevorzugt ausgerichtete Lauffläche antrifft, sondern durch rotationssymmetrische Reibverhältnisse weitestgehend unabhängig von der rotativen Ausrichtung läuft.

In einer weiteren vorteilhaften Ausgestaltung kann auch die zweite Ausnehmung als Ringnut ausgebildet sein. Auch hier stellt ein Vorteil die Rotationssymmetrie der Anordnung bezüglich Kräfteverhältnissen der Lauffläche des Ankers dar. Außerdem ist eine Ringnut günstig zu fertigen.

Vorteilhaft kann der Anker im Inneren des Polrohrs geführt sein. Auch bei einer Ausnehmung im Polrohr beispielsweise als Ringnut können Stege an beiden Enden der Ausnehmung eine Führung und Lagerung des Ankers darstellen. Auf jeden Fall ist es günstig, wenn die Führung des Ankers im Polrohr erfolgt, da das Polrohr als relativ steife Einheit ausgelegt sein kann und dadurch die Abweichung von einer ideal zylindrischen Lauffläche des Ankers minimiert werden kann.

In einer vorteilhaften Ausgestaltung kann die Ausnehmung sich im Bereich des Polrohrs axial bis zu dem Polrohrkonus zwischen Verbindungssteg und Polrohr erstrecken. So wird eine gewisse Länge der Ausnehmung erreicht und das Schmutzreservoir verfügt dadurch über ein ausreichendes Volumen, um eine möglichst hohe Standzeit eines Getriebes ohne Getriebeölwechsel zu verwirklichen.

Gemäß einer vorteilhaften Ausgestaltung können die erste und die zweite Ausnehmung axial zueinander beabstandet sein. Zum einen ist so eine Trennung der beiden Schmutzreservoirs gegeben, zum anderen bleibt so mindestens ein Steg zwischen der ersten und der zweiten Ausnehmung als Führung und Lagerung für die Bewegung des Ankers. Die zweite Führung wird zweckmäßigerweise an dem der ersten Ausnehmung gegenüber liegenden Ende der zweiten Ausnehmung ausgebildet.

Gemäß einer vorteilhaften Ausgestaltung kann die erste Ausnehmung zu einem vorderen Ankerraum in Form eines Ringspalts weitergeführt sein. Eine solche Ausgestaltung weist den Vorteil auf, dass möglichst wenige Schmutzpartikel aus dem vorderen Ankerraum auf die Lauffläche des Ankers gelangen und diese behindern können. Auf der anderen Seite bildet die erste Ausnehmung so ein Schmutzpartikelreservoir für Schmutzpartikel, die an der Abstreifkante abgestreift werden.

Der Ringspalt ist relativ klein ausgeführt und verhindert, dass der Anker bei seiner Bewegung mit dem Polkern direkt in Kontakt kommt und dadurch auch keine Kräfte auf den Polkern ausübt. Der Ringspalt ist zweckmäßigerweise so dünn ausgeführt, dass keine Schmutzpartikel von dem vorderen Ankerraum in die erste Ausnehmung gelangen können.

Gemäß einer vorteilhaften Ausgestaltung kann die zweite Ausnehmung zu einem hinteren Ankerraum geschlossen sein. Auf diese Weise lässt sich eine zweite Führung zusätzlich zu der ersten Führung zwischen erster und zweiter Ausnehmung für den Anker günstig darstellen. Auch ist das durch die zweite Ausnehmung gebildete Schmutzreservoir dadurch abgeschlossen und es kann von dem hinteren Ankerraum nicht zusätzlicher Schmutz auf die Ankerlauffläche gelangen.

Gemäß einer vorteilhaften Ausgestaltung kann die Abstreifkante der ersten Ausnehmung in einer Arbeitsstellung des Ankers auf einer axialen Höhe nahe einer Stirnfläche des Ankers angeordnet sein. Eine solche Anbringung der Abstreifkante möglichst weit vorne an der Stirnfläche des Ankers gewährleistet, dass die Lauffläche des Ankers möglichst in voller Länge von Schmutzpartikeln frei gehalten werden kann.

Gemäß einer vorteilhaften Ausgestaltung kann die erste Ausnehmung am oder benachbart zum Verbindungssteg angeordnet sein. So kann ein abgesetzter Polhut, auch wenn eine zweite Ausnehmung am Anker angebracht sein sollte, mit einem solchen Anker zur Erhöhung der Robustheit gegen Verschmutzung des Betriebsmediums kombiniert werden.

Gemäß einer weiteren vorteilhaften Ausgestaltung kann die erste Ausnehmung auch am Anker angeordnet sein. Auch dadurch ist eine mechanische Entlastung des Polhuts gegeben, da der Anker in diesem Bereich keinen direkten Kontakt zur Innenkontur und damit zur Lauffläche des Polhuts aufweist.

Gemäß einer vorteilhaften Ausgestaltung kann die zweite Ausnehmung am Polrohr angeordnet sein. Damit kann der Anker eine durchgehende Außenfläche aufweisen, was für möglichst homogene Laufeigenschaften des Ankers vorteilhaft ist.

Gemäß einer weiteren vorteilhaften Ausgestaltung kann die zweite Ausnehmung auch am Anker angeordnet sein. Alternativ ist jedoch auch möglich, die zweite Ausnehmung und damit eine zusätzliche mechanische Entlastung und ein weiteres Schmutzreservoir in der Außenfläche des Ankers unterzubringen und damit günstige Laufeigenschaften des Ankers auch bei einer Schmutzbeaufschlagung des Betriebsmediums zu erhalten.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Schnitt durch ein Hydraulikventil nach einem Ausführungsbeispiel der Erfindung in einer hinteren Arbeitsstellung;
- Fig. 2: einen vergrößerten Schnitt durch den Bereich des Magnetaktors des Hydraulikventils aus Fig. 1 in einer hinteren Schaltstellung;
- Fig. 3: einen detaillierten Schnitt durch das Hydraulikventil aus Fig. 1 mit Fokus auf eine erste Ausnehmung und eine zweite Ausnehmung des Polrohrs; und
- Fig. 4: einen weiteren detaillierten Schnitt durch das Hydraulikventil aus Fig. 1 mit Fokus auf die erste Ausnehmung und eine Abstreiferkante des Polrohrs.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

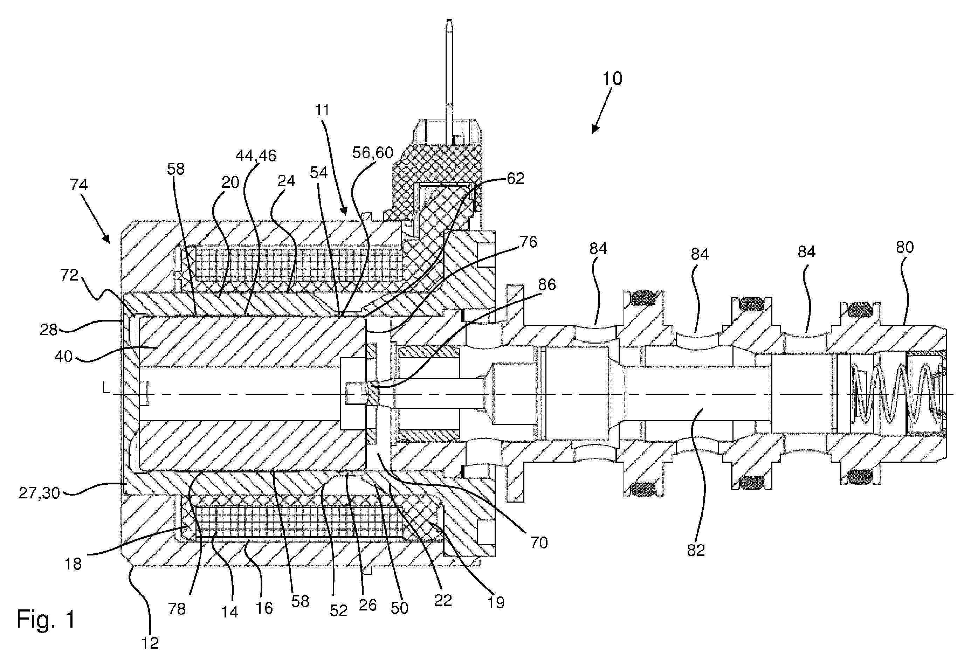

Figur 1 zeigt einen Schnitt durch ein Hydraulikventil 10 nach einem Ausführungsbeispiel der Erfindung in einer hinteren Arbeitsstellung 74. Das Hydraulikventil 10, das in Figur 1 als hydraulisches Getriebeventil ausgebildet ist, umfasst ein magnetisierbares Gehäuse 12, welches eine Magnetspule 14 an einem Außenumfang 16 und an wenigstens einer Stirnseite 18 umschließt. Die Magnetspule 14 ist in einen Trägerkörper 19, vorzugsweise aus Kunststoff, aus Gründen der elektrischen Isolation, eingebettet oder eingegossen. Der Trägerkörper 19 wiederum ist von dem Gehäuse 12 an dem Außenumfang 16 eng umschlossen.

Im Inneren des Gehäuses 12 ist ein Polhut 20 angeordnet, welcher in Richtung Stirnseite 18 der Magnetspule 14 axial aufeinander folgend einen Polkern 22 und ein Polrohr 24 umfasst. Polkern 22 und Polrohr 24 sind dabei durch einen Verbindungssteg 26 einstückig verbunden, wobei der Polkern 22 über einen Polkernkonus 50 mit dem Verbindungssteg 26 und das Polrohr 24 über einen Polrohrkonus 52 mit dem Verbindungssteg 26 verbunden sind. Das Polrohr 24 weist an einer dem Verbindungssteg 26 abgewandten Stirnseite 27 ein freies Ende 30 auf, das mit einer Abschlussplatte 28 geschlossen ist. Im Inneren 46 des Polhuts 20 wird auf einer gemeinsam zwischen Polhut 20 und einem Anker 40 definierten Längsachse L der Anker 40 geführt. Der Anker 40 treibt über einen Verbindungsbereich 86 einen hydraulischen Kolben 82 an, der in einem Ventilgehäuse 80 mit mehreren hydraulischen Anschlüssen die hydraulische Steuerung eines Getriebes bewirkt. Die hydraulische Funktion ist hier nicht näher ausgeführt.

Die im Gehäuse 12 angeordnete Magnetspule 14, der Verbindungssteg 26 und der den Polkern 22 und das Polrohr 24 umfassenden Polhut 20 sowie der Anker 40 bilden den wesentlichen Teil eines Magnetaktors 11 des Hydraulikventils 10.

Im Bereich des Polkerns 22 und des Verbindungsstegs 26 ist eine erste Ausnehmung 56 vorgesehen, wobei an einem Ende der ersten Ausnehmung 56 im Bereich eines Übergangs zwischen Verbindungssteg 26 und einem Polrohrkonus 52 eine Abstreifkante 54 ausgebildet ist. Die Abstreifkante 54 ist in einer Arbeitsstellung 74 des Ankers 40, bei der der Anker 40 an der Abschlussplatte 28 anliegt, auf einer axialen Höhe nahe einer Stirnfläche 76 des Ankers 40 angeordnet und dient zum Abstreifen von Schmutzpartikeln beispielsweise auf Grund von mechanischem Abrieb oder von Zerspanungsrückständen in dem hydraulischen Fluid, mit dem das Hydraulikventil 10 betrieben wird. Auf diese Weise wird verhindert, dass solche Schmutzpartikel auf die Lauffläche 58 des Ankers 40 gelangen können.

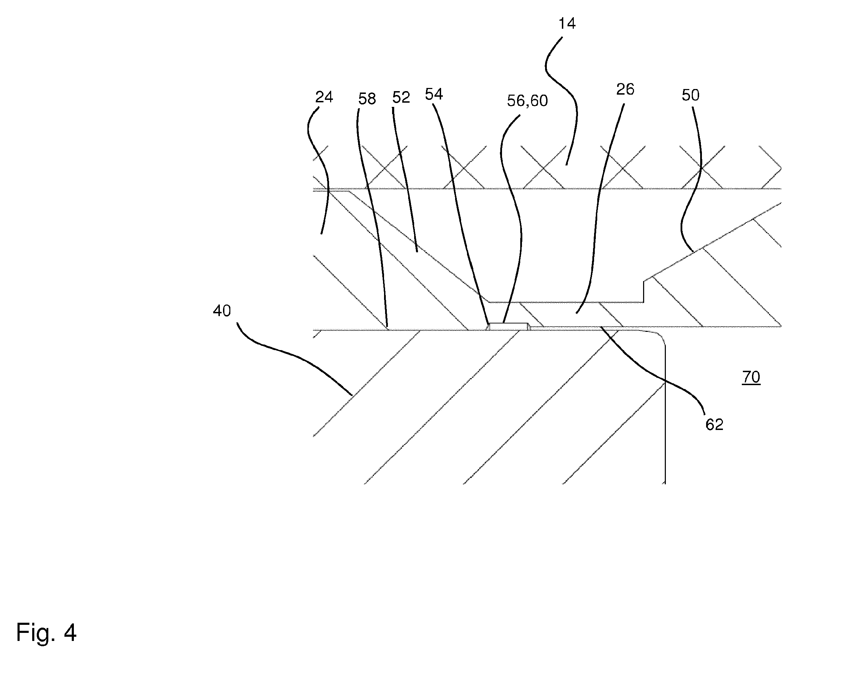

Die erste Ausnehmung 56 ist als Ringnut 60 ausgebildet und über einen Ringspalt 62, wie in Figur 4 zu erkennen ist, bis zu dem vorderen Ankerraum 70 weitergeführt. Die erste Ausnehmung 56 ist auf einem Teil der axialen Höhe des Verbindungsstegs 26 angeordnet. In einer alternativen Ausgestaltung der Erfindung kann die erste Ausnehmung 56 jedoch auch am Anker 40 angeordnet sein. Durch eine solche erste Ausnehmung 56 mit Weiterführung in Form des Ringspalts 62 zum vorderen Ankerraum 70 im Bereich des relativ dünnwandigen Verbindungsstegs 26 wird verhindert, dass Kräfte durch die Bewegung des Ankers 40 auf den Verbindungssteg 26 und den Polkern 22 ausgeübt werden und so der Polhut 20 eine Deformation in seiner Längsachse L erfährt. Durch diese robuste Ausführung des Polhuts 20 gegenüber Deformationen auf Grund von mechanischer oder thermischer Verformung ist auch gewährleistet, dass der Anker 40 bei seiner Bewegung in dem Magnetaktor 11 möglichst wenig von der idealen Längsachse L, welche durch die Fertigung des Polhuts 20 definiert ist, abweicht und so energieeffizient arbeiten kann.

In einer Lauffläche 58 zwischen Polrohr 24 und Anker 40 ist eine zweite Ausnehmung 44 vorgesehen, die als Ringnut 46 ausgebildet ist. Die Ausnehmung 44 erstreckt sich im Bereich des Polrohrs 24 axial bis zu dem Polrohrkonus 52 zwischen Verbindungssteg 26 und Polrohr 24 und dient als weiteres Schmutzreservoir für Schmutz- und/oder Abriebpartikel in dem hydraulischen Fluid. Die erste Ausnehmung 56 und die zweite Ausnehmung 44 sind axial zueinander beabstandet, wobei die zweite Ausnehmung 44 zu einem hinteren Ankerraum 72 geschlossen ist, sodass der Anker 40 auf dem Bereich des Polrohrs 24, das an beiden Enden der zweiten Ausnehmung 44 an der Lauffläche 58 des Ankers 40 stehen geblieben ist, im Inneren 48 des Polrohrs 24 geführt und gelagert ist. Die zweite Ausnehmung 44 ist in der dargestellten Ausführungsform am Polrohr 24 angeordnet. In einer alternativen Ausgestaltung kann die zweite Ausnehmung 44 jedoch auch am Anker 40 angeordnet sein.

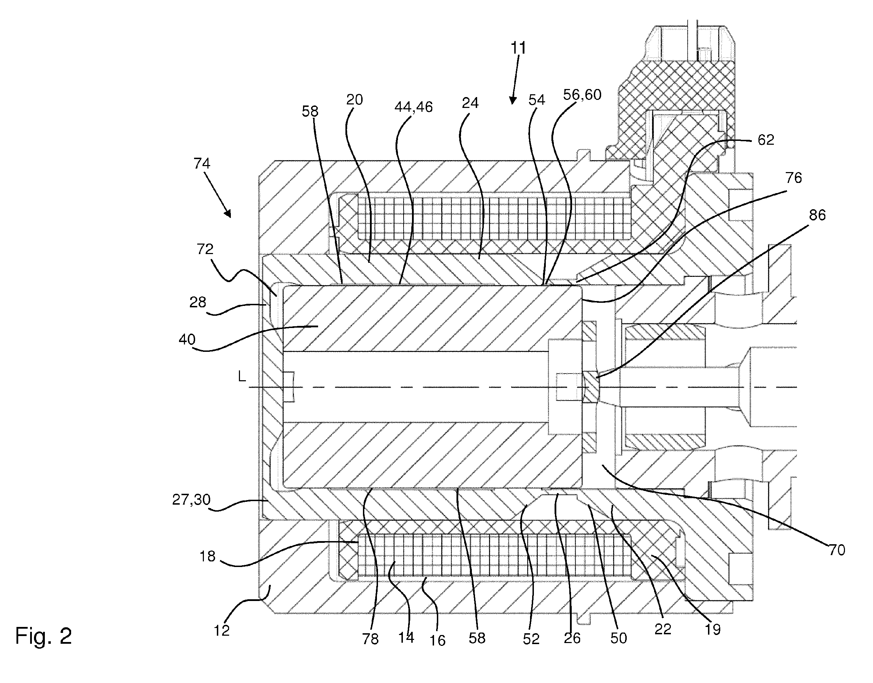

Figur 2 stellt dazu einen vergrößerten Schnitt durch den Bereich des eigentlichen Magnetaktors 11 des Hydraulikventils 10 aus Fig. 1 in einer hinteren Schaltstellung 74 dar. Der Magnetaktor 11 umfasst dabei im Wesentlichen die im Gehäuse 12 angeordnete Magnetspule 14, den Verbindungssteg 26 und den den Polkern 22 und das Polrohr 24 umfassenden Polhut 20 sowie den Anker 40. Details der erste Ausnehmung 56 im Verbindungssteg 26 sowie der zweiten Ausnehmung 44 im Polrohr 24 sind in Figur 2 deutlicher zu erkennen.

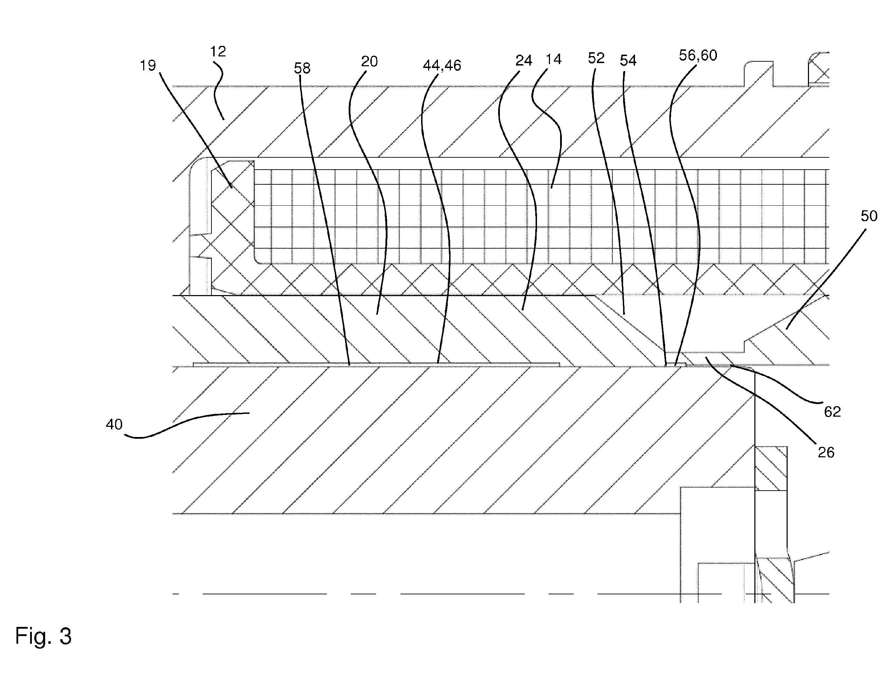

Figur 3 zeigt einen detaillierten Schnitt durch das Hydraulikventil 10 aus Fig. 1 mit Fokus auf die erste Ausnehmung 56 und die zweite Ausnehmung 44 des Polrohrs 24. Die erste Ausnehmung 56 ist als Ringnut 60 ausgeführt, auf einem Teil der axialen Länge des Verbindungsstegs 26 zwischen Polkernkonus 50 und Polrohrkonus 52 in das Polrohr 24 beispielsweise eingefräst. Die erste Ausnehmung 56 beginnt an einem Ende mit der Abstreiferkante 54 an dem Übergang zwischen Polrohrkonus 52 und Verbindungssteg 26 und endet auf der Länge des Verbindungsstegs 26.

Die zweite Ausnehmung 44, die ebenfalls als Ringnut 46 ausgeführt ist, erstreckt sich über einen Teil der axialen Länge des Polrohrs 24.

Figur 4 zeigt einen weiteren detaillierten Schnitt durch das Hydraulikventil 10 aus Fig. 1 mit Fokus auf die erste Ausnehmung 56 und die Abstreiferkante 54 des Polrohrs 24. Die erste Ausnehmung 56 mit ihrer Abstreiferkante 54 am Übergang zwischen Verbindungssteg 26 und Polrohrkonus 52 ist als Ringnut 60 im Bereich des Verbindungsstegs 26 deutlich zu erkennen. Die erste Ausnehmung 56 wird in der in Figur 4 dargestellten Ausführungsform als Ringspalt 62 zwischen Verbindungssteg 26 und Anker 40 offen zu dem vorderen Ankerraum 70 weitergeführt, sodass der Anker 40, der im Bereich des Polrohrs 24 auf der Lauffläche 58 zwischen Anker 40 und Polrohr 24 geführt und gelagert ist, im Bereich des Verbindungsstegs 26 keine direkte Berührung zu dem Verbindungssteg 26 hat und so auch keine Kräfte auf den relativ dünnwandigen Verbindungssteg 26 ausübt. Durch diese robuste Ausführung des Polhuts 20 gegenüber Deformationen auf Grund von mechanischer oder thermischer Verformung ist gewährleistet, dass der Anker 40 bei seiner Bewegung in dem Magnetaktor 11 möglichst wenig von der idealen Längsachse L, welche durch die Fertigung des Polhuts 20 definiert ist, abweicht.

### Bezugszeichenliste

- 10: Hydraulikventil
- 11: Magnetaktor
- 12: Gehäuse
- 14: Magnetspule
- 16: Außenumfang
- 18: Stirnseite
- 19: Trägerkörper Kunststoff
- 20: Polhut
- 22: Polkern
- 24: Polrohr
- 26: Verbindungssteg
- 27: Stirnseite Polrohr
- 28: Abschlussplatte
- 30: Ende Polrohr

- 40: Anker
- 42: Innenseite
- 44: Ausnehmung
- 46: Ringnut
- 48: Inneres
- 50: Polkernkonus
- 52: Polrohrkonus
- 54: Abstreiferkante
- 56: erste Ausnehmung
- 58: Lauffläche
- 60: Ringnut
- 62: Ringspalt

- 70: vorderer Ankerraum
- 72: hinterer Ankerraum
- 74: hintere Arbeitsstellung
- 76: Stirnfläche
- 78: Außenfläche

- 80: Ventilgehäuse
- 82: Kolben
- 84: hydraulischer Anschluss
- 86: Verbindungsbereich

## Patentansprüche

1. Hydraulikventil (10), insbesondere hydraulisches Getriebeventil, umfassend
- ein magnetisierbares Gehäuse (12), welches eine Magnetspule (14) an einem Außenumfang (16) und an wenigstens einer Stirnseite (18) umschließt,
- einen im Inneren des Gehäuses (12) angeordneten Polhut (20), welcher in Richtung Stirnseite (18) der Magnetspule (14) axial aufeinander folgend einen Polkern (22) und ein Polrohr (24) umfasst, wobei Polkern (22) und Polrohr (24) durch einen Verbindungssteg (26) einstückig verbunden sind, wobei der Polkern (22) über einen Polkernkonus (50) mit dem Verbindungssteg (26) und/oder das Polrohr (24) über einen Polrohrkonus (52) mit dem Verbindungssteg (26) verbunden sind, und wobei das Polrohr (24) an einer dem Verbindungssteg (26) abgewandten Stirnseite (27) ein mit einer Abschlussplatte (28) geschlossenes Ende (30) aufweist,
- einen im Inneren (46) des Polhuts (20) geführten Anker (40),
wobei in einer Lauffläche (58) zwischen Anker (40) und einem Bereich des Polkerns (22) und/oder des Verbindungsstegs (26) eine Ausnehmung (56) in radialer Richtung vorgesehen ist.

2. Hydraulikventil nach Anspruch 1, wobei in einer Lauffläche (58) zwischen Polrohr (24) und Anker (40) eine zweite Ausnehmung (44) in radialer Richtung vorgesehen ist.

3. Hydraulikventil (10), insbesondere hydraulisches Getriebeventil, umfassend
- ein magnetisierbares Gehäuse (12), welches eine Magnetspule (14) an einem Außenumfang (16) und an wenigstens einer Stirnseite (18) umschließt,
- einen im Inneren des Gehäuses (12) angeordneten Polhut (20), welcher in Richtung Stirnseite (18) der Magnetspule (14) axial aufeinander folgend einen Polkern (22) und ein Polrohr (24) umfasst, wobei Polkern (22) und Polrohr (24) durch einen Verbindungssteg (26) einstückig verbunden sind, wobei der Polkern (22) über einen Polkernkonus (50) mit dem Verbindungssteg (26) und/oder das Polrohr (24) über einen Polrohrkonus (52) mit dem Verbindungssteg (26) verbunden sind, und wobei das Polrohr (24) an einer dem Verbindungssteg (26) abgewandten Stirnseite (27) ein mit einer Abschlussplatte (28) geschlossenes Ende (30) aufweist,
- einen im Inneren (46) des Polhuts (20) geführten Anker (40),
wobei in einer Lauffläche (58) zwischen Polrohr (24) und Anker (40) eine Ausnehmung (44) in radialer Richtung vorgesehen ist.

4. Hydraulikventil nach Anspruch 3, wobei in einer Lauffläche (58) zwischen Anker (40) und einem Bereich des Polkerns (22) und/oder des Verbindungsstegs (26) eine erste Ausnehmung (56) in radialer Richtung vorgesehen ist.

5. Hydraulikventil nach einem der vorhergehenden Ansprüche, wobei an einem Ende der ersten Ausnehmung (56) im Bereich eines Übergangs zwischen Verbindungssteg (26) und einem Polrohrkonus (52) eine Abstreifkante (54) ausgebildet ist.

6. Hydraulikventil nach einem der vorhergehenden Ansprüche, wobei die erste Ausnehmung (56) als Ringnut (60) ausgebildet ist.

7. Hydraulikventil nach Anspruch 6, wobei die erste Ausnehmung (56) als doppelte Ringnut (60, 62) mit unterschiedlichen Nuttiefen ausgebildet ist, wobei die Ringnut mit geringerer Tiefe sich in axialer Richtung an die Ringnut mit größerer Tiefe zum Verbindungssteg (26) hin anschließt.

8. Hydraulikventil nach einem der vorhergehenden Ansprüche, wobei die zweite Ausnehmung (44) als Ringnut (46) ausgebildet ist.

9. Hydraulikventil nach einem der vorhergehenden Ansprüche, wobei der Anker (40) im Inneren (48) des Polrohrs (24) geführt ist.

10. Hydraulikventil nach einem der vorhergehenden Ansprüche, wobei die zweite Ausnehmung (44) sich im Bereich des Polrohrs (24) axial bis zu dem Polrohrkonus (52) zwischen Verbindungssteg (26) und Polrohr (24) erstreckt.

11. Hydraulikventil nach einem der vorhergehenden Ansprüche, wobei die erste Ausnehmung (56) und die zweite Ausnehmung (44) axial zueinander beabstandet sind.

12. Hydraulikventil nach einem der vorhergehenden Ansprüche, wobei die erste Ausnehmung (56) zu einem vorderen Ankerraum (70) in Form eines Ringspalts (62) weitergeführt ist.

13. Hydraulikventil nach einem der vorhergehenden Ansprüche, wobei die zweite Ausnehmung (44) zu einem hinteren Ankerraum (72) geschlossen ist.

14. Hydraulikventil nach einem der vorhergehenden Ansprüche, wobei die Abstreifkante (54) in einer hinteren Arbeitsstellung (74) des Ankers (40) auf einer axialen Höhe nahe einer Stirnfläche (76) des Ankers (40) angeordnet ist.

15. Hydraulikventil nach einem der vorhergehenden Ansprüche, wobei die erste Ausnehmung (56) am oder benachbart zum Verbindungssteg (26) angeordnet ist.

16. Hydraulikventil nach einem der Ansprüche 1 bis 13, wobei die erste Ausnehmung (56) am Anker (40) angeordnet ist.

17. Hydraulikventil nach einem der vorhergehenden Ansprüche, wobei die zweite Ausnehmung (44) am Polrohr (24) angeordnet ist.

18. Hydraulikventil nach einem der Ansprüche 2 bis 15, wobei die zweite Ausnehmung (44) am Anker (40) angeordnet ist.
